# EUROPÄISCHE PATENTSCHRIFT

(11) **EP 1 347 116 B1**
(45) Veröffentlichungstag und Bekanntmachung des Hinweises auf die Patenterteilung: **24.11.2004**
(21) Anmeldenummer: 03001426.0
(22) Anmeldetag: 22.01.2003
(51) Int. Cl.: E04D 13/16

(54) **Profilelement mit einer Schiene und einer Hafte, Dachsystem und Verfahren zum Eindecken eines Daches**
Profiled element with a rail and a bracket, roof system and method for covering a roof
Elément profilé avec un rail et une patte de fixation, système de toiture et procédé de couverture d'une toiture

(30) Priorität: 20.03.2002 DE 10212448
(43) Veröffentlichungstag der Anmeldung: 24.09.2003
(60) Teilanmeldung: 04010173.5
(73) Patentinhaber: Pröckl GmbH, 94424 Arnstorf (DE)
(72) Erfinder: Pröckl, Thomas, Dr., 94424 Arnstorf (DE); Pröckl, Gert, Dipl.-Ing., 94424 Arnstorf (DE)
(74) Vertreter: Castell, Klaus, Dr.-Ing.

(56) Entgegenhaltungen:
- EP-A- 0 685 612
- FR-A- 2 543 627
- GB-A- 529 886
- GB-A- 984 136
- GB-A- 2 198 161
- US-A- 4 438 611
- US-A- 5 636 488

## Beschreibung

Die Erfindung betrifft ein Dachsystem mit einer Eindeckung, einer Tragkonstruktion, einer Isolationsplatte zwischen der Eindeckung und der Tragkonstruktion und Profilelementen auf der Isolationsplatte, wobei die Profilelemente eine Schiene und eine Hafte aufweisen, wobei die Schiene an der Tragkonstruktion befestigt ist und die Eindeckung an der Hafte befestigt ist und ein Verfahren zum Herstellen eines derartigen Dachsystems.

Profilelemente mit einer Schiene und einer Hafte werden dazu verwendet, eine Dacheindeckung an einer Decke oder einer Dachunterkonstruktion zu befestigen. Unter Hafte wird ein Haltebügel z. B. für Stehfalzdächer, für Bördelfalzdächer oder Klemmfalzdächer verstanden. Die Bügel bestehen z. B. aus Edelstahl, Aluminium oder verzinkt beschichtetem Stahl. Bei einem zweischaligen Dachsystem bildet die Decke die eine Schale und die Eindeckung die andere Schale. Auf der Decke liegt in der Regel eine Dampfsperre oder eine Vordeckung und die Isolationsschicht auf und auf der Isolationsschicht liegt das Profilelement aus Schiene und Hafte. Dieses Profilelement ist mit der Decke oder der Unterkonstruktion verbunden und die Hafte dient dazu, eine Eindeckung am Profilelement zu befestigen.

Bei dem europäischen Patent EP 0 685 612 B1, dessen Dachsystem alle Merkmale des Oberbegriffs des Anspruchs 1 aufweist, liegt auf einer unteren Schale eine trittfeste Dämmung. In diese Dämmung werden Nuten eingefräst und in die Nuten werden mehrere einige Meter lange U-Schienen so hineingedrückt, dass die Schenkel der U-Schienen vollständig in den Nuten der Wärmedämmung liegen. Anschließend werden die U-Profile mit Schrauben oder Nieten an der unteren Schale befestigt. Sowie die langen U-Profilschienen an der unteren Schale befestigt sind, werden beabstandet auf der U-Profilschiene mehrere Haften angeschraubt. Die Eindeckung bildet in der Regel ein Metalldach, das als obere Schale an den Haften befestigt wird.

Der Erfindung liegt die Aufgabe zu Grunde, dieses in der Praxis vielfach eingesetzte System weiter zu verbessern.

Diese Aufgabe wird mit einem gattungsgemäßen Dachsystem gelöst, bei dem die Hafte mit der Schiene verprägt ist.

Für die Verbindung zwischen Hafte und Schiene eignen sich prinzipiell eine Vielzahl an Verbindungsmöglichkeiten. Die naheliegenden Alternativen der Haftverbindungen haben jedoch den Nachteil, dass die Verbindungen den geforderten statischen Anforderungen nicht entsprechen (z. B. auf Holzschalung) und daher mehr Haften verwendet werden müssen. Die erfindungsgemäße Prägeverbindung zwischen Hafte und Schiene bringt eine große Arbeitserleichterung vor Ort auf der Baustelle, da die Hafte schon vorher beim Herstellen der Profilelemente mit der Schiene verprägt werden kann. Außerdem ermöglicht das Verprägen von Schiene und Hafte die Anzahl der Haften zu reduzieren, da die mit der Schiene verprägten Haften höheren statischen Belastungen genügen als eine herkömmliche Verbindung.

Vorteilhaft ist es, wenn die Schiene ein abgewinkeltes U-Profil aufweist. Dies ermöglicht es, die Schiene derart auf oder in die Dämmung zu drücken, dass sich ein Teil der Schiene an oder in der Dämmung verankert.

Um das Profil in einer besonders dünnen Materialstärke auszuführen und gleichzeitig hohen statischen Anforderungen zu genügen, wird vorgeschlagen, dass mindestens eine Seite des Profils eine Sicke aufweist. Derartige Sicken erhöhen die Stabilität des Profils und erlauben es, dünnere Materialstärken zu verwenden. Beispielsweise kann beim Einsatz eines U-Profils an den Schenkeln des Profils eine in Längsrichtung des Profils sich erstreckende Sicke vorgesehen werden, um einer Verformung der Schiene entgegen zu wirken.

Ein Ausführungsbeispiel sieht vor, dass die Schiene eine Stärke von weniger als 1,6 mm, vorzugsweise weniger als 1,25 mm, aufweist. Hierdurch kann nicht nur beträchtlich Material eingespart werden. Die dünne Materialstärke führt auch zu einer Reduktion des Gewichtes der Schiene und erleichtert somit die Verarbeitung.

Vorteilhaft ist es, wenn die Schiene verzinkt ist. Dies erlaubt es, ein günstiges Blechmaterial zu verwenden ohne Korrosion befürchten zu müssen. Des weiteren können Schienen aus Aluminium oder Edelstahl eingesetzt werden, welche die gleichen Vorteile bieten.

Ein angenehmes Aussehen und ein Schutz der Oberfläche einer Metallschiene wird vorzugsweise durch ein Beschichten der Schiene erreicht.

Vorteilhaft ist es, wenn die Hafte ein Edelstahlteil aufweist. Hierdurch werden Korrosionen auch am Übergang zur Eindeckung und zur Schiene vermieden.

Eine einfache und kostengünstige Verarbeitung wird dadurch erzielt, dass die Schiene eine Länge von weniger als 2 m, vorzugsweise weniger als 1 m und insbesondere weniger als 0,5 m aufweist. Gerade kurze Schienenstücke lassen sich kostengünstig herstellen und transportieren und erleichtern die Arbeitsweise vor Ort auf dem einzudeckenden Dach. Außerdem kann durch die kurzen Schienenstücke der Abstand der Schienenstücke zueinander und somit die Anzahl der Haften pro Quadratmeter auf einfache Art und Weise leicht variiert werden.

Eine besonders vorteilhafte Ausführungsvariante sieht vor, dass die Hafte mehrteilig ist, wobei ein fixiertes Teil mit der Schiene verprägt ist und ein variables Teil relativ zum fixierten Teil verschiebbar ist. Dies führt zu einem definierten Spiel des variablen Teils der Hafte relativ zur Schiene, um die notwendige Ausdehnungsmöglichkeit der Eindeckung in Folge des Temperatureinflusses zu gewährleisten.

Eine vorteilhafte Ausführungsvariante ist ein Dachsystem bei dem die Profilelemente sich in einer Längsrichtung erstrecken und in dieser Längsrichtung beabstandet angeordnet sind.

Die beabstandete Anordnung von sich in Längsrichtung erstreckenden Profilelementen ermöglicht es, auf einem Profilelement mehrere Haften in einem definierten Abstand anzuordnen und vor Ort auf der Baustelle durch die Variation der Abstände der Profilelemente zueinander die Anzahl der Haften pro Quadratmeter zu variieren. Somit wird es möglich, sich in Längsrichtung erstreckende Profilelemente mit vorzugsweise mehreren Haften in größeren Stückzahlen herzustellen und die Anzahl dieser Profilelemente pro Quadratmeter je nach den individuellen statischen Anforderungen des jeweiligen Bauvorhabens zu variieren.

Vorteilhaft ist es, wenn die Profilelemente mindestens 0,3 m, vorzugsweise mindestens 0,5 m in der Längsrichtung beabstandet angeordnet sind. Ein derartiger Abstand zwischen den Profilelementen reduziert den Materialaufwand und die auf der Baustelle benötigte Arbeitszeit. Den statischen Anforderungen wird durch die Anzahl der Haften pro Profilelement Rechnung getragen.

Eine einfache Verarbeitung wird dadurch erzielt, dass die Profilelemente längs paralleler Linien angeordnet sind. Dies ermöglicht es, auf einfache Art und Weise Blechdächer schnell zu verlegen, indem die Schienen parallel oder in einem Winkel zur Längserstreckung der Blechtafeln angeordnet werden.

Hierbei ist es von Vorteil, wenn die parallelen Linien mindestens 0,2 m, vorzugsweise mindestens 0,3 m beabstandet angeordnet sind. Hierdurch wird eine ausreichende statische Festigkeit bei reduziertem Arbeitsaufwand für das Verlegen der Schienen erzielt.

Um die Verankerung der Profilelemente in der Isolationsplatte zu verbessern wird vorgeschlagen, dass die Profilelemente mindestens einen Steg aufweisen, der sich in die Isolationsplatte erstreckt. Der Steg kann hierbei in die Isolationsplatte eingedrückt werden oder in einer Nut verankert werden.

Vorteilhaft ist es, wenn die Profilelemente mindestens einen Steg aufweisen, der eine Schneide aufweist. Die Schneide erleichtert es, den Steg in die unter dem Profilelement angeordnete Isolationsplatte einzudrücken. Zur Bildung einer Schneide kann das Stegende wie eine Messerschneide oder als Zickzacklinie entsprechend einer Sägezahnschneide ausgebildet sein.

Eine freie Positionierung der Profilelemente auf der Isolationsplatte wird dadurch erzielt, dass die Isolationsplatte auf einer Deckenfläche aufliegt, die von einer Tragkonstruktion gehalten ist, und die Profilelemente an der Deckenfläche befestigt sind. Die Deckenfläche, die beispielsweise von einem als Unterschale eingesetzten Trapezblech gebildet wird, kann derart stabil ausgebildet sein, dass die Profilelemente an der Deckenfläche befestigt werden können.

Schließlich wird die der Erfindung zugrundeliegende Aufgabe auch mit einem Verfahren zum Herstellen eines derartigen Dachsystems gelöst, bei dem Profilelemente an einer Isolationsplatte auf beabstandeten Linien beabstandet zueinander befestigt werden, indem sie mit einer unter der Isolationsplatte angeordneten Decke verbunden werden und die Haften mit einer Eindeckung verbunden werden. Gegenüber durchgehenden U-Profil-Schienen ermöglicht die Verwendung von in Längsrichtung beabstandet zueinander angeordneten Profilelementen die Reduktion der Anzahl der Haften pro Quadratmeter bei gleichzeitiger Reduktion des für die Schienen benötigten Materials.

Vorteilhaft ist es, wenn bereits mit Haften versehene Profilelemente an der Tragkonstruktion befestigt werden. Sofern die Profilelemente bereits mit Haften bestückt sind bevor sie an der Tragkonstruktion befestigt werden, kann die Arbeitszeit auf der Baustelle deutlich reduziert werden, da der gesamte Arbeitsschritt der Verbindung der Haften mit den Profilelementen vor Ort entfallen kann.

Erfindungsgemäße Ausführungsbeispiele sind in der Zeichnung dargestellt und werden im Folgenden näher erläutert.

Es zeigt
- Figur 1: eine perspektivische Darstellung einer Schiene mit einer einteiligen Hafte
- Figur 2: einen Schnitt durch die in Figur 1 gezeigte Schiene längs der Linie II-II
- Figur 3: eine Aufsicht auf die in Figur 1 gezeigte Schiene,
- Figur 4: eine Vorderansicht der in Figur 1 gezeigten Schiene,
- Figur 5: eine Seitenansicht der in Figur 1 gezeigten Schiene,
- Figur 6: eine perspektivische Darstellung einer Schiene mit zweiteiliger Hafte,
- Figur 7: einen Schnitt längs der Linie VII-VII durch die in Figur 6 gezeigte Schiene,
- Figur 8: eine Draufsicht auf die in Figur 6 gezeigte Schiene,
- Figur 9: eine Vorderansicht der in Figur 6 gezeigten Schiene und
- Figur 10: eine Seitenansicht der in Figur 6 gezeigten Schiene.

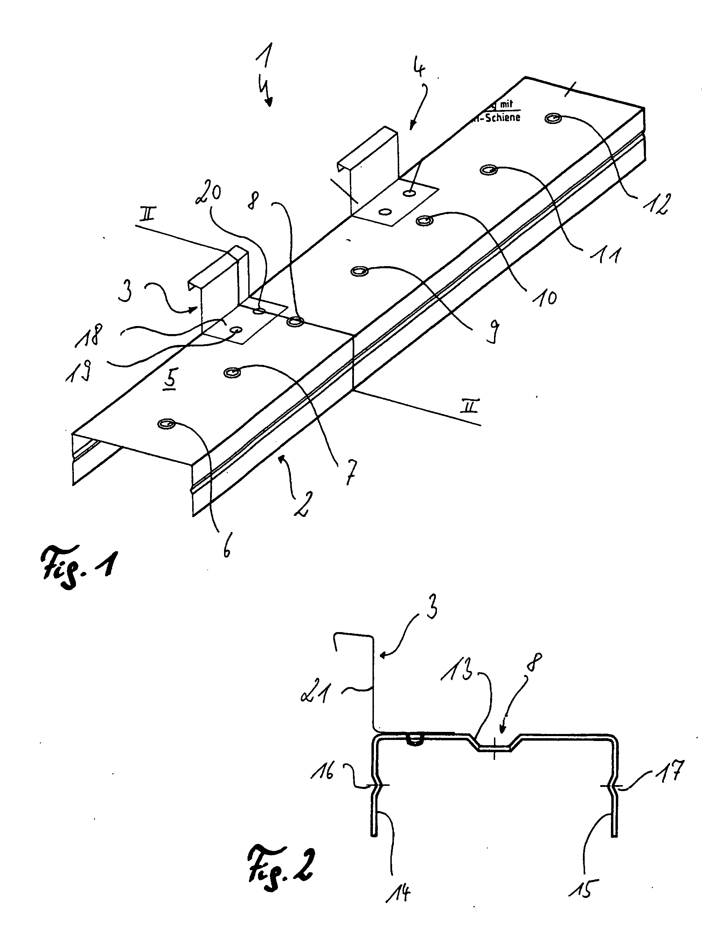

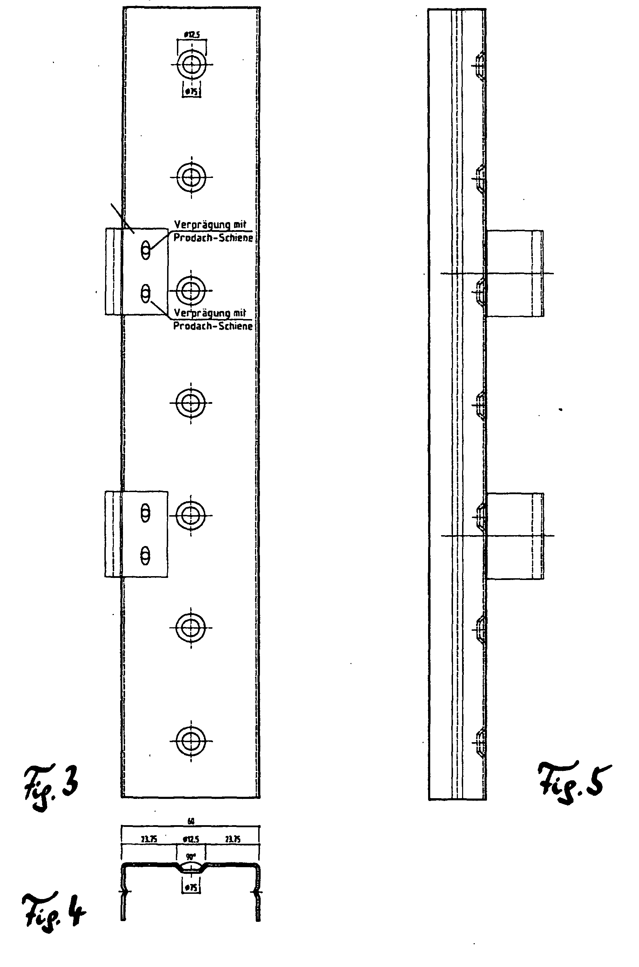

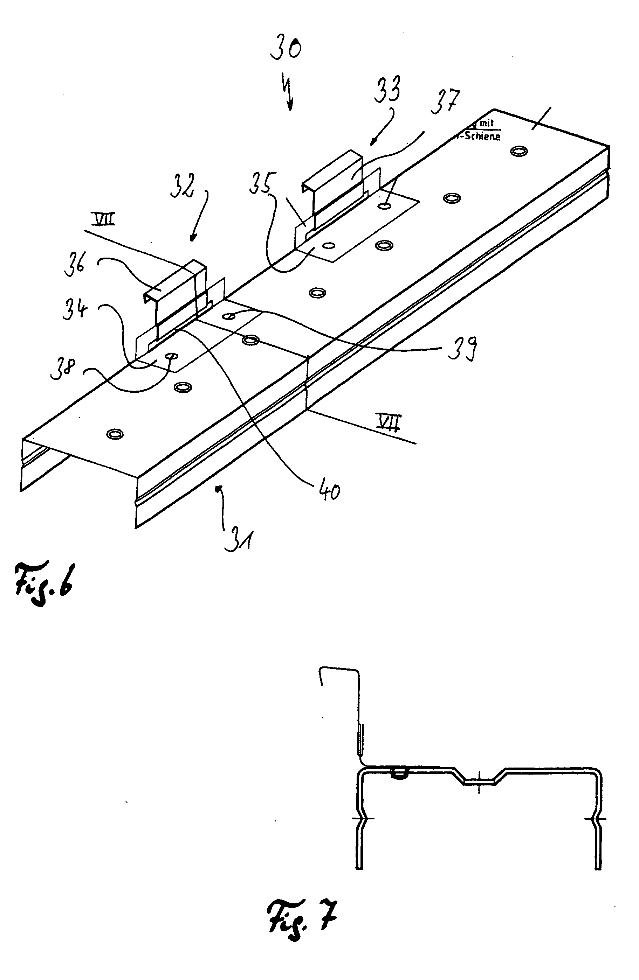

Das in Figur 1 gezeigte Profilelement 1 besteht im Wesentlichen aus der U-förmigen Schiene 2 und den Haften 3 und 4. Die U-förmige Schiene 2 hat eine Basisfläche 5, auf der regelmäßig beabstandet sieben Bohrungen 6 bis 12 angebracht sind. Die Bohrungen liegen auf der Mittellinie der Längserstreckung der Schiene 1 und sind mit einem angefasten Rand 13 versehen. Dies führt dazu, dass sich einerseits der angefaste Rand 13 der Bohrungen 6 bis 12 bei der Montage in die unter der Schiene liegende Isolationsplatte (nicht gezeigt) einpresst und andererseits eine in die Bohrung eingesetzte Senkkopfschraube (nicht gezeigt) zu einer planen Oberfläche der Grundfläche 5 der Schiene 2 führt.

An den beiden Längsseiten der Grundflächen 5 der Schiene 2 sind senkrecht abgewinkelte Stege 14 und 15 vorgesehen, in deren Mitte sich jeweils eine Sicke 16 bzw. 17 über die Längserstreckung der Schiene erstreckt. Die Breite der Stege 14 und 15 ist etwas kleiner als die Hälfte der Breite der Grundfläche 5.

Die im Ausführungsbeispiel dargestellte Schiene 2 hat eine Länge von 350 mm und eine Breite von 60 mm, während die Länge der Stege 25 mm beträgt. Die 4,6 mm breiten Sicken ermöglichen es, die Schiene aus einem 1,15 mm dicken Stahlblech herzustellen. Dieses Stahlblech ist verzinkt und beschichtet.

Jeweils ein Drittel der Schienenlänge vom Schienenende entfernt ist auf der Grundfläche 5 eine Hafte 3 bzw. 4 angeordnet. Die Haften bestehen aus einem im Wesentlichen Z-förmig angewinkelten Edelstahlblech mit einer Stärke von 0,4 mm. An ihrer Auflagefläche 18 haben sie zwei beabstandete Punkte 19 und 20, an denen sie mit der Grundfläche 5 der Schiene 2 verprägt sind. Die beabstandeten Prägepunkte 19 und 20 verhindern ein Verdrehen der Hafte 3 relativ zur Schiene 2 und sorgen für eine hohe statische Stabilität der Verbindung zwischen der Hafte 3 und der Schiene 2. Die Hafte 3 ist so an der Schiene 2 angeordnet, dass sich die zur Grundfläche 18 senkrechte Erstreckung 21 der Hafte 3 in einer Ebene mit dem Schenkel 14 der Schiene 2 erstreckt. Die weitere Hafte 4 ist in entsprechender Anordnung zum Schenkel 14 der Schiene 2 mit der Schiene verprägt. Die Haften liegen somit auf einer zur Längserstreckung der Schiene 2 parallelen Linie und ermöglichen es, eine Blecheindeckung mit der Schiene zu verbinden. Die verwendeten Haften sind 38 mm breit und an ihrem der Schiene abgewandten Ende U-förmig abgewinkelt, um in bekannter Art und Weise mit einem Metalldach verfalzt werden zu können.

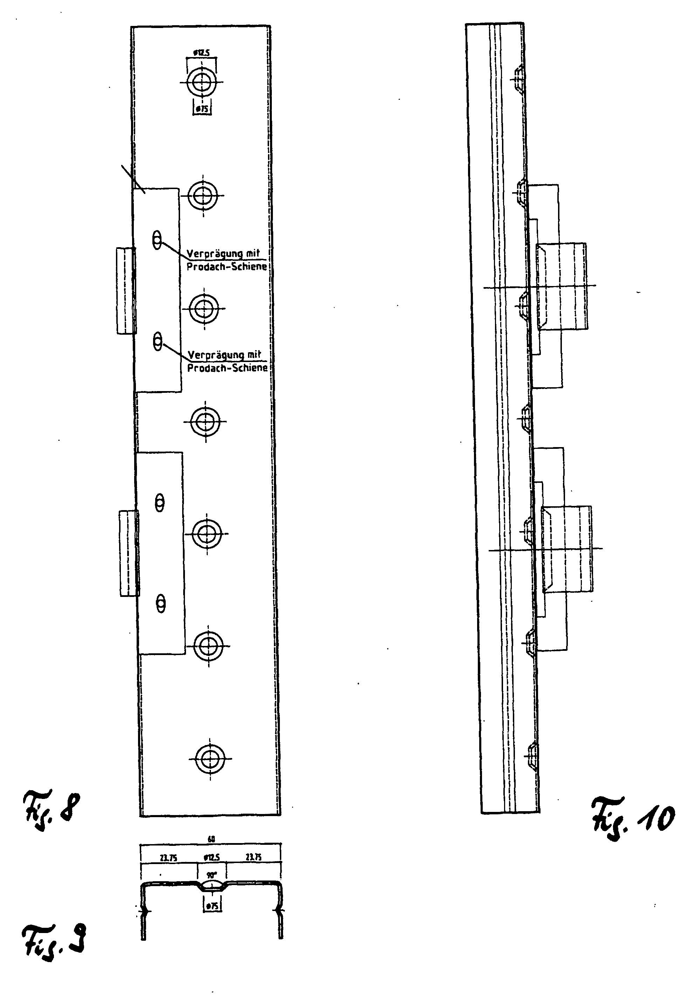

Das in Figur 6 gezeigte Profilelement 30 weist eine Schiene 31 auf, die entsprechend der in Figur 1 gezeigten Schiene 2 ausgebildet ist. An dieser Schiene 31 sind jedoch zweiteilige Haften 32 und 33 angeordnet. Diese mehrteiligen Haften weisen ein fixiertes Teil 34 bzw. 35 und ein variables Teil 37 auf, das in das fixierte Teil 34 bzw. 35 eingehängt ist.

Das fixierte Teil 34 besteht aus einem abgewinkelten Edelstahlblech, dessen größerer Schenkel an zwei Punkten 38 und 39 mit der Schiene 31 ververprägt ist. Der kürzere Schenkel weist einen Spalt 40 auf, in den der variable Teil 36 der Hafte 32 eingehängt ist. Der variable Teil 36 der Hafte 32 ist im Spalt 40 verschiebbar, da die Längserstreckung des Spalts 40 geringfügig größer ist als die Breite des variablen Teils 36 der Hafte 32.

Die zweiteilige Hafte 32 ermöglicht somit eine Verschiebung des variablen Teils 36 in vorgegebenen Grenzen relativ zum fixierten Teil 34, um eine notwendige Ausdehnungsmöglichkeit der Eindeckung in Folge des Temperatureinflusses zu gewährleisten. Die Haft 32 ist entsprechend ausgebildet.

Die Ausführung der Hafte als zweiteilige Hafte 32 führt darüber hinaus dazu, dass die Prägepunkte 38 und 39 weiter beabstandet als bei der einteiligen Hafte angeordnet werden können und gegebenenfalls auch mehr als zwei Prägepunkte am fixierten Teil der Hafte 32 vorgesehen werden können. Im Ausführungsbeispiel hat der fixierte Teil 34 der Hafte 32 eine Länge von 90 mm und der variable Teil eine Breite von 38 mm, so dass der fixierte Teil 34 beidseitig des variablen Teils 36 um 26 mm vorsteht. Die Bohrungen in der Schiene sind wie bei dem in Figur 1 gezeigten Ausführungsbeispiel in einem Abstand von 50 mm angeordnet.

Bei der Verwendung der Profilelemente wird zur Herstellung eines zweischaligen Dachsystems auf eine Unterschale eine Dampfsperre gelegt. Als Unterschale eignet sich beispielsweise ein Trapezblech. Auf die Dampfsperre wird eine Isolationsplatte wie beispielsweise eine Faserdämmplatte aufgelegt. Diese Faserdämmplatte ist vorzugsweise begehbar und weist beispielsweise eine Rohdichte von 120 kg/m³ auf. Auf der Oberseite der Faserdämmplatte werden Nuten eingefräst, in die die Schenkel der U-förmigen Schiene des Profilelementes hineinragen. Die Schiene wird soweit in die Dämmplatte eingedrückt, dass eine im Wesentlichen ebene Oberfläche entsteht. Je nach vorgegebener Statik werden in vorgefräste Nuten in einem zuvor berechneten Abstand Profilelemente eingesetzt und mittels Schrauben mit der Unterschale verschraubt. Die an den Profilelementen bereits angebrachten Haften ermöglichen es anschließend, eine Oberschale an den Profilelementen zu befestigen.

Sofern zwischen der Isolationsplatte und der Oberschale eine Unterspannbahn oder eine Matte angeordnet werden soll, wird diese im Bereich der Haften ausgeschnitten und auf die Oberseite der Schiene sowie die Oberseite der Isolationsplatte aufgelegt.

Als Oberschale eignet sich beispielsweise eine Stehfalzeindeckung. Das Profilelement eignet sich jedoch für beliebige andere Eindeckungen, die mittels Haften befestigbar sind.

## Patentansprüche

1. Dachsystem mit einer Eindeckung, einer Tragkonstruktion, einer Isolationsplatte zwischen der Eindeckung und der Tragkonstruktion und Profilelementen (1) auf der Isolationsplatte, wobei die Profilelemente (1) eine Schiene (2) und eine Hafte (3) aufweisen, wobei die Schiene (2) an der Tragkonstruktion befestigt ist und die Eindeckung an der Hafte (3) befestigt ist ***dadurch gekennzeichnet, dass*** die Hafte (3) mit der Schiene (2) verprägt ist.

2. Dachsystem nach Anspruch 1, ***dadurch gekennzeichnet, dass*** die Schiene (2) ein abgewinkeltes Profil aufweist.

3. Dachsystem nach einem der vorhergehenden Ansprüche, ***dadurch gekennzeichnet, dass*** mindestens eine Seite (14) des Profils eine Sicke (16) aufweist.

4. Dachsystem nach einem der vorhergehenden Ansprüche, ***dadurch gekennzeichnet, dass*** die Schiene (2) eine Stärke von weniger als 1,6 mm, vorzugsweise weniger als 1,25 mm aufweist.

5. Dachsystem nach einem der vorhergehenden Ansprüche, ***dadurch gekennzeichnet, dass*** die Schiene (2) verzinkt ist.

6. Dachsystem nach einem der vorhergehenden Ansprüche, ***dadurch gekennzeichnet, dass*** die Schiene (2) beschichtet ist.

7. Dachsystem nach einem der vorhergehenden Ansprüche, ***dadurch gekennzeichnet, dass*** die Hafte (3) ein Edelstahlteil aufweist.

8. Dachsystem nach einem der vorhergehenden Ansprüche, ***dadurch gekennzeichnet, dass*** die Schiene (2) eine Länge von weniger als 2 m, vorzugsweise weniger als 1 m und insbesondere weniger als 0,5 m aufweist.

9. Dachsystem nach einem der vorhergehenden Ansprüche, ***dadurch gekennzeichnet, dass*** die Hafte (32) mehrteilig ist, wobei ein fixiertes Teil (34) mit der Schiene (31) verprägt ist und ein variables Teil (36) relativ zum fixierten Teil (34) verschiebbar ist.

10. Dachsystem nach einem der vorhergehenden Ansprüche, ***dadurch gekennzeichnet, dass*** die Profilelemente (1) sich in einer Längsrichtung erstrecken und in dieser Längsrichtung beabstandet angeordnet sind.

11. Dachsystem nach Anspruch 10, ***dadurch gekennzeichnet, dass*** die Profilelemente (1) mindestens 0,3 m, vorzugsweise mindestens 0,5 m in der Längsrichtung beabstandet angeordnet sind.

12. Dachsystem nach Anspruch 10 oder 11, ***dadurch gekennzeichnet, dass*** die Profilelemente (1) längs paralleler Linien angeordnet sind.

13. Dachsystem nach Anspruch 12, ***dadurch gekennzeichnet, dass*** die parallelen Linien mindestens 0,2 m, vorzugsweise mindestens 0,3 m beabstandet angeordnet sind.

14. Dachsystem nach einem der Ansprüche 10 bis 13, ***dadurch gekennzeichnet, dass*** die Profilelemente (1) mindestens einen Steg (14) aufweisen, der sich in die Isolationsplatte erstreckt.

15. Dachsystem nach einem der Ansprüche 10 bis 14, ***dadurch gekennzeichnet, dass*** die Profilelemente mindestens einen Steg (14) aufweisen, der eine Schneide aufweist.

16. Dachsystem nach einem der Ansprüche 10 bis 15, ***dadurch gekennzeichnet, dass*** die Isolationsplatte auf einer Deckenfläche aufliegt, die von einer Tragkonstruktion gehalten ist und die Profilelemente an der Deckenfläche befestigt sind.

17. Verfahren zum Herstellen eines Dachsystems nach einem der vorhergehenden Ansprüche, wobei Profilelemente (1) an einer Isolationsplatte auf beabstandeten Linien beabstandet zueinander befestigt werden, indem sie mit einer unter der Isolationsplatte angeordneten Decke verbunden werden und die Haften mit einer Eindeckung verbunden werden.

18. Verfahren nach Anspruch 17, ***dadurch gekennzeichnet, dass*** mit Haften versehene Profilelemente (1) an der Tragkonstruktion befestigt werden.

## Claims

1. A roof system having a roof covering, a carrying structure, an insulating plate between the roof covering and the carrying structure, and profile members (1) on the insulating plate, said profile members (1) comprising a rail (2) and a bracket (3), said rail (2) being secured on the carrying structure and the roof covering being secured on the bracket (3), ***characterized in that*** the bracket (3) is stamped integral with the rail (2).

2. The roof system according to claim 1, ***characterized in that*** the rail (2) comprises an angled profile.

3. The roof system according to one of the afore mentioned claims, ***characterized in that*** at least one side (14) of the profile comprises a bead (16).

4. The roof system according to one of the afore mentioned claims, ***characterized in that*** the rail (2) comprises a thickness of less than 1,6 mm, preferably less than 1,25 mm.

5. The roof system according to one of the afore mentioned claims, ***characterized in that*** the rail (2) is zinc-coated.

6. The roof system according to one of the afore mentioned claims, ***characterized in that*** the rail (2) is coated.

7. The roof system according to one of the afore mentioned claims, ***characterized in that*** the bracket (3) comprises a special steel part.

8. The roof system according to one of the afore mentioned claims, ***characterized in that*** the rail (2) has a length of less than 2 m, preferably less than 1 m and more specifically less than 0,5 m.

9. The roof system according to one of the afore mentioned claims, ***characterized in that*** the bracket (32) is made of several parts, a secured part (34) being stamped integral with the rail (31) and a movable part (36) being slidable relative to the secured part (34).

10. The roof system according to one of the afore mentioned claims, ***characterized in that*** the profile members (1) extend in a lengthwise direction and are disposed in a spaced-apart relationship in said lengthwise direction.

11. The roof system according to claim 10, ***characterized in that*** the profile members (1) are disposed at least 0,3 m, preferably at least 0,5 m, apart in said lengthwise direction.

12. The roof system according to claim 10 or 11, ***characterized in that*** the profile members (1) are disposed along parallel lines.

13. The roof system according to claim 12, ***characterized in that*** the parallel lines are disposed at least 0,2 m, preferably at least 0,3 m, apart.

14. The roof system according to one of the claims 10 to 13, ***characterized in that*** the profile members (1) comprise at least one web (14) that extends into the insulating plate.

15. The roof system according to one of the claims 10 to 14, ***characterized in that*** the profile members comprise at least one web (14) that comprises a cutting edge.

16. The roof system according to one of the claims 10 to 15, ***characterized in that*** the insulating plate rests on a ceiling surface that is held by a carrying structure and that the profile members are secured to the ceiling surface.

17. A method of manufacturing a roof system according to one of the afore mentioned claims, profile members (1) being secured to an insulating plate in a spaced apart relationship on spaced apart lines by joining them with a ceiling disposed underneath the insulating plate and by joining the brackets with a roof covering.

18. The method according to claim 17, ***characterized in that*** profile members (1) provided with brackets are secured to the carrying structure.

## Revendications

1. Système de toiture avec une couverture, une structure porteuse, une plaque isolante entre la couverture et la structure porteuse, et des éléments profilés (1) sur la plaque isolante, les éléments profilés (1) comportant un rail (2) et une patte de fixation (3), le rail (2) étant fixé sur la structure porteuse et la couverture étant fixée sur la patte de fixation (3) ***caractérisé en ce que*** la patte de fixation (3) est estampée d'un seul tenant avec le rail (2).

2. Système de toiture selon la revendication 1, ***caractérisé en ce que*** le rail (2) comporte un profil coudé.

3. Système de toiture selon l'une quelconque des revendications précédentes, ***caractérisé en ce qu***'au moins un côté (14) du profil comporte une moulure (16).

4. Système de toiture selon l'une quelconque des revendication précédentes, ***caractérisé en ce que*** le rail (2) a une épaisseur inférieure à 1,6 mm, de préférence inférieure à 1,25 mm.

5. Système de toiture selon l'une quelconque des revendications précédentes, ***caractérisé en ce que*** le rail (2) est zingué.

6. Système de toiture selon l'une quelconque des revendications précédentes, ***caractérisé en ce que*** le rail (2) est revêtu d'une couche.

7. Système de toiture selon l'une quelconque des revendications précédentes, ***caractérisé en ce que*** la patte de fixation (3) comporte une partie en acier spécial.

8. Système de toiture selon l'une quelconque des revendications précédentes, ***caractérisé en ce que*** le rail (2) a une longueur inférieure à 2 m, de préférence inférieure à 1 m et notamment inférieure à 0,5 m.

9. Système de toiture selon l'une quelconque des revendications précédentes, ***caractérisé en ce que*** la patte de fixation (32) est constituée de plusieurs parties, une partie fixe (34) étant estampée d'un seul tenant avec le rail (31) et une partie mobile (36) étant mobile en translation par rapport à la partie fixe (34).

10. Système de toiture selon l'une quelconque des revendications précédentes, ***caractérisé en ce que*** les éléments profilés (1) s'étendent dans une direction longitudinale et sont disposés suivant cette direction longitudinale avec un écartement entre eux.

11. Système de toiture selon la revendication 10, ***caractérisé en ce que*** les éléments profilés (1) sont disposés suivant la direction longitudinale avec un écartement entre eux d'au moins 0,3 m, de préférence d'au moins 0,5 m.

12. Système de toiture selon la revendication 10 ou 11, ***caractérisé en ce que*** les éléments profilés (1) sont disposés le long de lignes parallèles.

13. Système de toiture selon la revendication 12, ***caractérisé en ce que*** les lignes parallèles sont disposées avec un écartement entre elles d'au moins 0,2 m, de préférence d'au moins 0,3 m.

14. Système de toiture selon l'une quelconque des revendications 10 à 13, ***caractérisé en ce que*** les éléments profilés (1) comportent au moins une âme (14) qui s'étend dans la plaque isolante.

15. Système de toiture selon l'une quelconque des revendications 10 à 14, ***caractérisé en ce que*** les éléments profilés comportent au moins une âme (14) qui comporte une arête coupante.

16. Système de toiture selon l'une quelconque des revendications 10 à 15, ***caractérisé en ce que*** la plaque isolante repose sur une surface de plafond qui est maintenue par une structure porteuse et que les éléments profilés sont fixés à la surface du plafond.

17. Procédé de fabrication d'un système de toiture selon l'une quelconque des revendications précédentes, où des éléments profilés (1) sont fixés sur des lignes espacées avec un écartement entre eux sur une plaque isolante, en les reliant à un plafond disposé en dessous de la plaque isolante et en reliant les pattes de fixation à une couverture.

18. Procédé selon la revendication 17, ***caractérisé en ce que*** des éléments profilés (1) munis de pattes de fixation sont montés sur la structure porteuse.
